# FASCICULE DE BREVET EUROPEEN

(11) **EP 3 755 585 B1**
(45) Date de publication et mention de la délivrance du brevet: **05.01.2022**
(21) Numéro de dépôt: 19710017.5
(22) Date de dépôt: 25.01.2019
(51) Int. Cl.: B60R 25/24, B60Q 1/48

(54) **VÉHICULE COMPORTANT UN SYSTÈME DE GESTION D'ACCÈS ET PROCÉDÉ D'AUTORISATION D'ACCÈS À UN VÉHICULE**
FAHRZEUG MIT EINEM ZUGANGSVERWALTUNGSSYSTEM UND VERFAHREN ZUR AUTORISIERUNG DES ZUGANGS ZU EINEM FAHRZEUG
VEHICLE HAVING AN ACCESS MANAGEMENT SYSTEM AND METHOD FOR AUTHORIZING ACCESS TO A VEHICLE

(30) Priorité: 21.02.2018 FR 1851455
(43) Date de publication de la demande: 30.12.2020
(73) Titulaire: PSA Automobiles SA, 78300 Poissy (FR)
(72) Inventeur: MICHEL, Stephane, 90150 FOUSSEMAGNE (FR)
(86) Numéro de dépôt international: PCT/FR2019/050161
(87) Numéro de publication internationale: WO 2019/162585

(56) Documents cités:
- EP-A1- 0 629 758
- DE-A1- 10 064 141
- US-A1- 2007 030 136
- US-A1- 2015 274 126

## Description

L'invention se rapporte au domaine de la gestion de l'accès à un véhicule automobile. Plus précisément, l'invention concerne un système automatique d'accès et de démarrage de véhicule automobile ainsi qu'un procédé d'autorisation de l'accès à un véhicule automobile.

On connaît des véhicules automobiles qui comportent un système d'accès et de démarrage sans intervention manuelle, couramment dénommé « accès et démarrage mains libres ». Un tel système permet de réaliser le déverrouillage des portières et/ou d'autres dispositifs de sécurité anti-vol du véhicule automobile, sans intervention manuelle de l'utilisateur. Pour cela, l'utilisateur est muni d'un identifiant, tel qu'une clé ou une carte électronique, couramment dénommé « identifiant mains libres », qui permet à une unité de commande du déverrouillage du véhicule automobile de reconnaître l'utilisateur autorisé, lorsque cet utilisateur est à proximité d'une porte du véhicule automobile et, généralement, lorsque l'utilisateur actionne la poignée d'ouverture ou plus généralement tout dispositif de commande d'ouverture extérieure de la porte.

L'identifiant peut être constitué par exemple par une carte électronique ou un émetteur fournissant un code d'identification qui doit être reconnu par l'unité de commande de déverrouillage du véhicule automobile pour permettre la manœuvre de déverrouillage.

Généralement, le système automatique d'accès et de démarrage comporte des moyens de détection de l'identifiant mains libres, dans une zone à l'intérieur de l'habitacle du véhicule automobile et dans plusieurs zones situées au moins partiellement à l'extérieur du véhicule automobile, par exemple au voisinage des portières du véhicule et au voisinage de la partie arrière du véhicule. Ainsi, le système automatique d'accès et de démarrage est apte à reconnaitre un identifiant à l'approche de son porteur, et déverrouille le véhicule.

Des fonctions autres que le déverrouillage peuvent également être mises en œuvre, telles que le démarrage du véhicule ou l'ajustement de réglages personnalisés (hauteur et position du siège conducteur, etc.), ou encore l'allumage des phares et d'un ou plusieurs projecteurs formant un éclairage dit « éclairage d'accueil ».

L'éclairage d'accueil peut être mis en œuvre de manière préalable ou concomitante au déverrouillage du véhicule, à l'approche du porteur d'un identifiant autorisé. Ainsi, l'éclairage d'accueil est activé dès lors qu'un identifiant (et donc son porteur) est détecté comme pénétrant à l'intérieur d'une zone (virtuellement) délimitée autour du véhicule. Ainsi, à chaque fois que le porteur de l'identifiant pénètre dans cette zone, l'éclairage d'accueil est activé. L'éclairage d'accueil est toutefois consommateur d'énergie, ce qui peut générer un risque de décharge de la batterie du véhicule dans certaines situations, notamment si un utilisateur pénètre un certain nombre de fois dans la zone d'accueil, voire dans le véhicule lui-même, mais sans démarrer celui-ci. Le document US20150274126A décrit un véhicule automobile comportant un système de gestion d'accès au véhicule, le système de gestion d'accès étant configuré pour détecter la présence d'un identifiant à proximité du véhicule, et pour activer un éclairage d'accueil lorsque l'identifiant est détecté à l'intérieur d'une première zone, dite zone d'accueil, le système de gestion d'accès comportant un compteur dont la valeur de comptage est incrémentée d'une unité à chaque détection, l'activation de l'éclairage d'accueil n'étant plus possible si la valeur de comptage atteint une valeur prédéterminée pendant un temps donné.

La présente invention a pour but de remédier aux inconvénients de l'état de la technique, et plus particulièrement ceux ci-dessus exposés, en proposant un système d'accès et de démarrage mains libres mettant en œuvre un éclairage d'accueil qui permette de préserver la charge de la batterie du véhicule.

À cet effet, l'invention concerne un véhicule automobile comportant un système de gestion d'accès au véhicule, le système de gestion d'accès étant configuré pour détecter la présence d'un identifiant, tel qu'une clé électronique ou un téléphone mobile, à proximité du véhicule, et pour activer un éclairage d'accueil lorsque l'identifiant est détecté à l'intérieur d'une première zone, dite zone d'accueil, le système de gestion d'accès comportant un compteur dont la valeur de comptage est incrémentée d'une unité à chaque activation de l'éclairage d'accueil, l'activation de l'éclairage d'accueil n'étant plus possible si la valeur de comptage atteint une valeur prédéterminée.

Ainsi, en permettant d'inhiber la fonction d'éclairage d'accueil au bout d'un certain nombre d'allumages consécutifs de l'éclairage d'accueil, sans que le moteur du véhicule n'ait été démarré (ou, alternativement, n'ait fonctionné pendant une durée minimale), l'invention permet d'économiser la batterie du véhicule, et ainsi d'assurer que celle-ci conserve un niveau de charge suffisant pour un démarrage ultérieur du moteur. L'invention présente en outre l'avantage d'être simple et peu coûteuse à mettre en œuvre.

Dans une réalisation, la valeur de comptage du compteur est remise à zéro à chaque démarrage du moteur.

Dans une réalisation, la valeur de comptage du compteur est remise à zéro si, après démarrage, la durée de fonctionnement du moteur atteint une durée minimale prédéterminée.

Dans une réalisation, la valeur prédéterminée est comprise entre 3 et 12, de préférence entre 5 et 10, et par exemple égale à 7.

Dans une réalisation, le système de gestion d'accès est configuré pour déverrouiller le véhicule si l'identifiant est détecté à l'intérieur d'une deuxième zone englobant le véhicule, dite zone de déverrouillage.

Dans une réalisation, la zone de déverrouillage est plus restreinte que la zone d'accueil.

Dans une réalisation, le système de gestion d'accès est configuré pour verrouiller le véhicule si l'identifiant est détecté comme ayant quitté une troisième zone englobant le véhicule, dite zone de verrouillage.

Dans une réalisation, la zone de verrouillage est plus restreinte que la zone d'accueil et/ou plus étendue que la zone de déverrouillage.

Dans une réalisation, le système de gestion d'accès comporte un module de communication sans fil, et comporte une pluralité d'antennes distantes les unes des autres et déportées par rapport au module de communication.

Dans une réalisation, le système de gestion d'accès comporte au moins quatre antennes.

Dans une réalisation, au moins deux antennes sont des antennes latérales, disposées de part et d'autre de l'axe longitudinal du véhicule, par exemple dans les portes latérales du véhicule.

L'invention concerne étalement un procédé d'autorisation de l'accès à un véhicule automobile, le procédé comportant les étapes suivantes :
- activer une fonction d'éclairage d'accueil lorsqu'un identifiant est détecté comme étant situé à l'intérieur d'une première zone englobant le véhicule, dite zone d'accueil ;
- incrémenter d'une unité la valeur de comptage d'un compteur à chaque activation de la fonction d'éclairage d'accueil ;
- inhiber la fonction d'éclairage d'accueil du véhicule lorsque la valeur de comptage du compteur atteint une valeur prédéterminée.

Dans une réalisation, la valeur de comptage du compteur est remise à zéro à chaque démarrage du moteur.

Dans une réalisation, la valeur de comptage du compteur est remise à zéro si, après démarrage, la durée de fonctionnement du moteur atteint une durée minimale prédéterminée.

Dans une réalisation, la valeur prédéterminée est comprise entre 3 et 12, de préférence entre 5 et 10, et par exemple égale à 7.

Dans une réalisation, le procédé comporte l'étape de déverrouiller le véhicule si l'identifiant est détecté à l'intérieur d'une deuxième zone englobant le véhicule, dite zone de déverrouillage.

Dans une réalisation, la zone de déverrouillage est plus restreinte que la zone d'accueil.

Dans une réalisation, le procédé comporte l'étape de verrouiller le véhicule si l'identifiant est détecté comme ayant quitté une troisième zone englobant le véhicule, dite zone de verrouillage.

Dans une réalisation, la zone de verrouillage est plus restreinte que la zone d'accueil et/ou plus étendue que la zone de déverrouillage.

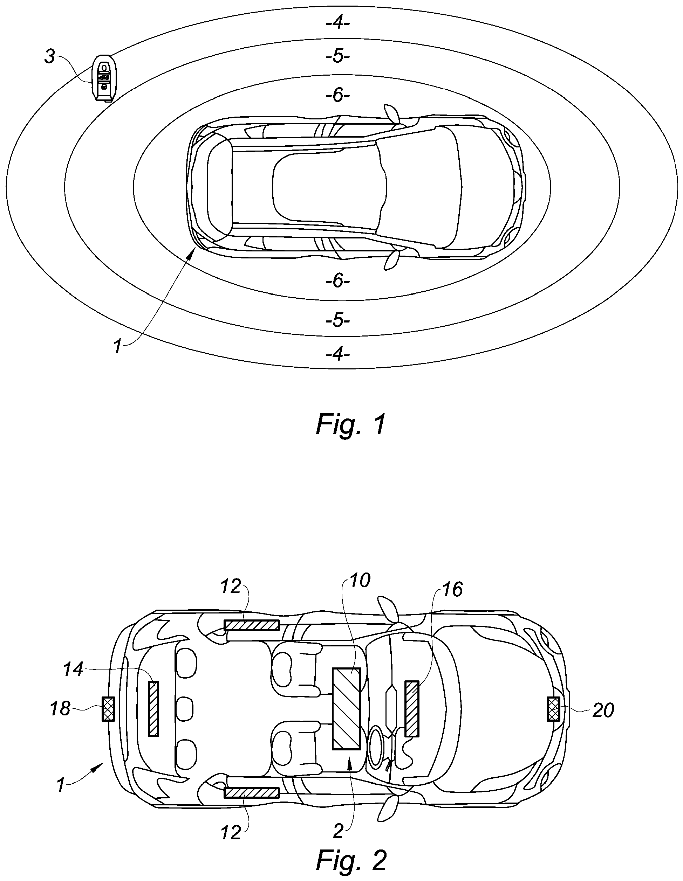

La présente invention sera mieux comprise à la lecture de la description détaillée qui suit, faite en référence aux dessins annexés, dans lesquels les figures 1 et 2 représentent un véhicule comportant un système automatique d'accès et de démarrage conforme à l'invention.

Les figures 1 et 2 représentent un véhicule 1 automobile, le véhicule 1 étant équipé d'un système automatique d'accès et de démarrage conforme à l'invention, ou système de gestion d'accès 2. Le système de gestion d'accès 2 est configuré pour détecter un identifiant 3 situé à proximité du véhicule 1. L'identifiant 3 est un appareil électronique portable, tel qu'une clé électronique, une carte électronique, un téléphone mobile, etc. Le système de gestion d'accès 2 est configuré pour déterminer la distance et/ou la position de l'identifiant 3 par rapport au véhicule 1. Plus précisément, le système de gestion d'accès est apte à déterminer si l'identifiant 3 (et donc son porteur) se situe à l'intérieur d'une première zone englobant le véhicule, dite zone d'accueil 4. Le bord de la zone d'accueil 4, dans l'exemple de forme globalement elliptique, se situe par exemple à une distance du véhicule comprise entre 2 et 4 mètres, et notamment égale à environ 3 mètres.

Lorsque le système de gestion d'accès 2 détecte la présence d'un identifiant autorisé à l'intérieur de la zone d'accueil 4, alors l'éclairage d'accueil est activé. Cette activation implique notamment l'allumage des phares du véhicule 1 et de différents projecteurs d'appoint, tels que des projecteurs permettant d'éclairer le sol à proximité des portes du véhicule.

Conformément à l'invention, le système de gestion d'accès 2 comporte un compteur dont la valeur de comptage est incrémentée d'une unité à chaque activation de l'éclairage d'accueil. Lorsque la valeur de comptage du compteur atteint une valeur prédéterminée, par exemple égale à 7, alors la fonction de l'éclairage d'accueil est inhibée : l'éclairage d'accueil ne peut plus être activé tant que la valeur de comptage n'a pas été remise à zéro. En inhibant la fonction d'éclairage d'accueil au bout d'un nombre prédéterminé d'activations consécutives de l'éclairage d'accueil sans démarrage du véhicule (et donc sans recharge au moins partielle de la batterie du véhicule par l'intermédiaire de l'alternateur entrainé par le moteur), on s'assure de préserver un niveau de charge de la batterie suffisant pour un démarrage ultérieur.

La remise à zéro de la valeur de comptage du compteur peut par exemple être effectuée à chaque démarrage du moteur. Alternativement, cette remise à zéro peut être effectuée si, après démarrage du moteur, celui-ci fonctionne pendant une durée supérieure ou égale à une durée prédéterminée.

Le système de gestion d'accès 2 comporte un module de communication 10 sans fil, apte à échanger, via une liaison sans fil, des données avec un appareil électronique portable tel qu'une clé électronique, une carte électronique, un téléphone mobile (notamment de type « smartphone » ou ordiphone), tel que la clé électronique 3 représentée sur la figure 1.

Le système de gestion d'accès 2 comporte une pluralité d'antennes disposées dans différentes zones du véhicule 1. Avantageusement, comme montré sur la figure 2, le véhicule comporte au moins quatre antennes déportées par rapport au module de communication 10 : deux antennes latérales 12 (disposées de chaque côté du véhicule, par exemple dans une porte latérale), une antenne arrière 14 (disposée par exemple à proximité de la lunette arrière), et une antenne avant 16 (disposée par exemple à proximité du pare-brise). Cet ensemble de quatre antennes peut avantageusement être complété par une ou plusieurs antennes supplémentaires, dans l'exemple deux antennes supplémentaires 18, 20 disposées respectivement dans les pare-chocs arrière et avant.

Dans l'exemple des figures, l'ensemble des antennes déportées décrites ci-dessus est de type basse fréquence, et chaque antenne est apte à émettre à intervalles réguliers un signal basse fréquence qui lui est propre. Lorsque ce signal est capté par un identifiant mains libres tel que l'identifiant 3, ce dernier émet en retour un signal haute fréquence que le module de communication 10 peut recevoir au moyen d'une antenne haute fréquence interne. Le signal reçu de l'identifiant permet au système de gestion d'accès de reconnaitre l'identifiant 3 comme étant autorisé et de déterminer que celui-ci se trouve à proximité du véhicule, et plus précisément quelle est la position de l'identifiant 3, en fonction de l'antenne déportée dont l'identifiant est le plus proche.

Le système de gestion d'accès 2 est ainsi apte à détecter toute pénétration de l'identifiant 3 (et donc de son porteur) à l'intérieur de la zone d'accueil 4 et, en réponse à cette détection, à commander l'activation de l'éclairage d'accueil.

Avantageusement, on pourra prévoir une ou plusieurs zone(s) particulière(s) en plus de la zone d'accueil 4. Par exemple, comme visible sur la figure 1, on pourra prévoir deux zones plus restreintes que la zone d'accueil 4 et englobant elles aussi le véhicule 1. La zone la plus restreinte est une zone de déverrouillage 6, zone dans laquelle la détection de l'identifiant 3 aboutit au déverrouillage du véhicule. Le bord de la zone déverrouillage 6, dans l'exemple de forme globalement elliptique, se situe par exemple à une distance du véhicule comprise entre 0.5 et 1,5 mètre. La zone intermédiaire, qui est dans l'exemple plus retreinte que la zone d'accueil 4 mais plus étendue que la zone de déverrouillage 6, constitue une zone de verrouillage 5. La détection de l'identifiant 3 sortant de la zone de verrouillage 5 alors que le véhicule est déverrouillé (par exemple après l'arrêt du véhicule ou après que l'identifiant 3 ait été détecté dans la zone de déverrouillage 6), a pour effet que le système de gestion d'accès 2 commande le verrouillage du véhicule. Le bord de la zone verrouillage 5, dans l'exemple de forme globalement elliptique, se situe par exemple à une distance du véhicule comprise entre 1.5 et 2,5 mètres.

## Revendications

1. Véhicule (1) automobile comportant un système de gestion d'accès (2) au véhicule, le système de gestion d'accès (2) étant configuré pour détecter la présence d'un identifiant (3), tel qu'une clé électronique ou un téléphone mobile, à proximité du véhicule (1), et pour activer un éclairage d'accueil lorsque l'identifiant est détecté à l'intérieur d'une première zone, dite zone d'accueil (4), le système de gestion d'accès (2) comportant un compteur dont la valeur de comptage est incrémentée d'une unité à chaque activation de l'éclairage d'accueil, l'activation de l'éclairage d'accueil n'étant plus possible si la valeur de comptage atteint une valeur prédéterminée.

2. Véhicule (1) selon la revendication précédente, dans lequel la valeur de comptage du compteur est remise à zéro à chaque démarrage du moteur.

3. Véhicule (1) selon la revendication 1, dans lequel la valeur de comptage du compteur est remise à zéro si, après démarrage, la durée de fonctionnement du moteur atteint une durée minimale prédéterminée.

4. Véhicule (1) selon l'une des revendications précédentes, dans lequel la valeur prédéterminée est comprise entre 3 et 12, de préférence entre 5 et 10, et par exemple égale à 7.

5. Véhicule (1) selon l'une des revendications précédentes, dans lequel le système de gestion d'accès (2) est configuré pour déverrouiller le véhicule si l'identifiant (3) est détecté à l'intérieur d'une deuxième zone englobant le véhicule, dite zone de déverrouillage (6), la zone de déverrouillage (6) étant par exemple plus restreinte que la zone d'accueil (4).

6. Véhicule (1) selon la revendication précédente, dans lequel le système de gestion d'accès (2) est configuré pour verrouiller le véhicule si l'identifiant (3) est détecté comme ayant quitté une troisième zone englobant le véhicule, dite zone de verrouillage (5), la zone de verrouillage (5) étant par exemple plus restreinte que la zone d'accueil (4) et/ou plus étendue que la zone de déverrouillage (6).

7. Procédé d'autorisation de l'accès à un véhicule (1) automobile, le procédé comportant les étapes suivantes :
- activer une fonction d'éclairage d'accueil lorsqu'un identifiant (3) est détecté à l'intérieur d'une première zone englobant le véhicule, dite zone d'accueil (4) ;
- incrémenter d'une unité la valeur de comptage d'un compteur à chaque activation de la fonction d'éclairage d'accueil ;
- inhiber la fonction d'éclairage d'accueil du véhicule lorsque la valeur de comptage du compteur atteint une valeur prédéterminée.

8. Procédé selon la revendication précédente, dans lequel la valeur de comptage du compteur est remise à zéro à chaque démarrage du moteur.

9. Procédé selon la revendication 7, dans lequel la valeur de comptage du compteur est remise à zéro si, après démarrage, la durée de fonctionnement du moteur atteint une durée minimale prédéterminée.

10. Procédé selon l'une des revendications 7 à 9, dans lequel la valeur prédéterminée est comprise entre 3 et 12, de préférence entre 5 et 10, et par exemple égale à 7.

## Patentansprüche

1. Kraftfahrzeug (1) mit einem Zugangsverwaltungssystem (2) zum Fahrzeug, wobei das Zugangsverwaltungssystem (2) so konfiguriert ist, dass es die Anwesenheit einer Kennung (3), wie etwa eines elektronischen Schlüssels oder eines Mobiltelefons, in der Nähe des Fahrzeugs (1) erfasst und eine Empfangsbeleuchtung aktiviert, wenn die Kennung innerhalb einer ersten Zone erfasst wird, die sogenannte Empfangszone (4), wobei das Zugangsverwaltungssystem (2) einen Zähler umfasst, dessen Zählwert bei jeder Aktivierung der Empfangsbeleuchtung um eine Einheit erhöht wird, wobei die Aktivierung der Empfangsbeleuchtung nicht mehr möglich ist, wenn der Zählwert einen vorbestimmten Wert erreicht.

2. Fahrzeug (1) nach dem vorhergehenden Anspruch, wobei der Zählwert des Zählers bei jedem Anlassen des Motors auf Null zurückgesetzt wird.

3. Fahrzeug (1) nach Anspruch 1, wobei der Zählwert des Zählers auf Null zurückgesetzt wird, wenn die Motorlaufzeit nach dem Starten eine vorbestimmte Mindestlaufzeit erreicht.

4. Fahrzeug (1) nach einem der vorhergehenden Ansprüche, wobei der vorbestimmte Wert zwischen 3 und 12, vorzugsweise zwischen 5 und 10, und beispielsweise gleich 7 ist.

5. Fahrzeug (1) nach einem der vorhergehenden Ansprüche, wobei das Zugangsverwaltungssystem (2) so konfiguriert ist, dass es das Fahrzeug entriegelt, wenn die Kennung (3) innerhalb einer zweiten, das Fahrzeug umfassenden Zone, der sogenannten Entriegelungszone (6), erfasst wird, wobei die Entriegelungszone (6) beispielsweise kleiner als die Aufnahmezone (4) ist.

6. Fahrzeug (1) nach dem vorhergehenden Anspruch, wobei das Zugangsverwaltungssystem (2) so konfiguriert ist, dass es das Fahrzeug verriegelt, wenn erkannt wird, dass die Kennung (3) einen dritten, das Fahrzeug umfassenden Bereich, den sogenannten Sperrbereich (5), verlassen hat, wobei der Sperrbereich (5) beispielsweise enger als der Aufnahmebereich (4) und/oder weiter als der Entriegelungsbereich (6) ist.

7. Verfahren zur Autorisierung des Zugangs zu einem Kraftfahrzeug (1), wobei das Verfahren die folgenden Schritte umfasst:
- Aktivieren einer Begrüßungsbeleuchtungsfunktion, wenn eine Kennung (3) innerhalb einer ersten, das Fahrzeug umfassenden Zone, der sogenannten Begrüßungszone (4), erfasst wird ;
- Inkrementieren des Zählwerts eines Zählers um eine Einheit bei jeder Aktivierung der Begrüßungsbeleuchtungsfunktion ;
- Inhibieren der Begrüßungsbeleuchtungsfunktion des Fahrzeugs, wenn der Zählwert des Zählers einen vorbestimmten Wert erreicht.

8. Verfahren nach dem vorhergehenden Anspruch, wobei der Zählwert des Zählers bei jedem Anlassen des Motors auf Null zurückgesetzt wird.

9. Verfahren nach Anspruch 7, bei dem der Zählwert des Zählers auf Null zurückgesetzt wird, wenn die Motorlaufzeit nach dem Starten eine vorbestimmte Mindestlaufzeit erreicht.

10. Verfahren nach einem der Ansprüche 7 bis 9, wobei der vorbestimmte Wert zwischen 3 und 12, vorzugsweise zwischen 5 und 10, und beispielsweise gleich 7 liegt.

## Claims

1. Motor vehicle (1) comprising an access management system (2) for the vehicle, the access management system (2) being configured to detect the presence of an identifier (3), such as an electronic key or a mobile telephone, in the vicinity of the vehicle (1), and to activate a welcome light when the identifier is detected within a first zone said reception zone (4), the access management system (2) comprising a counter whose count value is incremented by one unit at each activation of the reception lighting, the activation of the reception lighting no longer being possible if the count value reaches a predetermined value.

2. The vehicle (1) of the preceding claim, wherein the count value of the counter is reset to zero each time the engine is started.

3. The vehicle (1) according to claim 1, wherein the count value of the counter is reset to zero if, after starting, the engine running time reaches a predetermined minimum time.

4. The vehicle (1) according to any of the preceding claims, wherein the predetermined value is between 3 and 12, preferably between 5 and 10, and for example equal to 7.

5. Vehicle (1) according to one of the preceding claims, wherein the access management system (2) is configured to unlock the vehicle if the identifier (3) is detected within a second area encompassing the vehicle, the so-called unlocking area (6), the unlocking area (6) being, for example, more restricted than the reception area (4).

6. The vehicle (1) of the preceding claim, wherein the access management system (2) is configured to lock the vehicle if the identifier (3) is detected to have left a third area encompassing the vehicle, referred to as the lock area (5), the lock area (5) being for example more restricted than the welcome area (4) and/or larger than the unlock area (6).

7. A method for authorizing access to a motor vehicle (1), the method comprising the following steps:
- activating a reception lighting function when an identifier (3) is detected inside a first zone encompassing the vehicle, known as the reception zone (4) ;
- incrementing the count value of a counter by one unit each time the welcome lighting function is activated
- inhibiting the reception lighting function of the vehicle when the count value of the counter reaches a predetermined value.

8. The method of the preceding claim, wherein the counter count value is reset to zero each time the engine is started.

9. The method of claim 7, wherein the counter reading is reset to zero if, after starting, the engine run time reaches a predetermined minimum time.

10. The method of any of claims 7 to 9, wherein the predetermined value is between 3 and 12, preferably between 5 and 10, and for example equal to 7.
